# EUROPEAN PATENT APPLICATION

(11) **EP 1 006 678 A1**
(43) Date of publication of application: **07.06.2000**
(21) Application number: 98309982.1
(22) Date of filing: 04.12.1998
(51) Int. Cl.: H04B 7/185

(54) **Communications apparatus and method in satellite system for interference mitigation using user and interferer position**

(71) Applicant: ICO Services Ltd., London W6 9BN (GB)
(72) Inventor: Riley, Michael John, Bracknell, Berks RG42 4EZ (GB)
(74) Representative: Musker, David Charles

(57) **Abstract**

A satellite communications system comprising at least one satellite (4) in orbit about the Earth, and being for receiving a user uplink signal from a user terminal (2) adjacent the Earth, in the presence of co-channel interference from at least one interference source (121) adjacent the Earth, further comprising means for interference mitigation, characterised by said means being arranged to utilise position data related to the spatial separation, relative to the satellite or satellites (4), of the user terminal (2) and the or each said interference source (121) adjacent the Earth, and to spatially filter the content of said user uplink signal in dependence upon said position data to improve the ratio of said signal to said co-channel interference.

## Description

### FIELD OF THE INVENTION

This invention relates to communications with a mobile user, and particularly (but not exclusively) to such communications in which the link to the mobile user is via a satellite or satellites.

Terrestrial cellular communication systems are well known in the art and a number of standards, such as the GSM standard and the PCN standard exist which define different signalling protocols for them. Details of these standards are given for example in "Mobile Radio Technology" by Gordon White, Butterworth Heinemann, 1994. The GSM and PCN systems are digital communication systems and allow paging and data communications in addition to voice communications.

Mobile satellite communication systems have also been proposed in which radio frequency links are provided by a constellation of satellites. These satellite communication systems provide much greater coverage than terrestrial cellular systems. One example of such a system is the ICO™ system, aspects of which are described in patent publications WO 95/28747, WO 96/03814 and GB 2,295,296A. Other examples include the Iridium™ satellite cellular system, described for example in EP-A-0365885, and the Odyssey™ mobile communication system described for example in EP-A-0510789, EP-A-0575678 and EP-A-0648027.

An alternative proposed satellite cellular system is described in EP 0536921 and EP 0506255.

Because of the altitude of the satellites, the distance travelled by a signal from the user terminal to the satellite, and from the satellite to the Earth station, is much longer than the distance between a terrestrial user terminal and its local based station. According, the attenuation undergone by the signal is substantially higher.

In the user terminal uplink direction, the power available from some types of terminal (such as handsets) is very limited, and the gain of the antennas may be very low. As the satellite has somewhat higher power, the signal strength on the user downlink is somewhat larger. In the feeder link between the Earth station and the satellite, more power and higher gain antennas are available. Accordingly, the user terminal uplink is, in many cases, the link on which the signal is most susceptible to noise.

In addition to the thermal noise radiated by the planet on which the terminals are located, each user terminal may interfere with transmissions from others (despite nominally occupying a different time or frequency channel) due to errors or spreading in time and frequency.

Furthermore, although radio frequency usage is regulated, the fact that satellite systems cover the whole or a substantial part of the world makes it likely that in at least some areas, the frequencies used on the user link will also be used by terrestrial transmitters, which are therefore, from the point of view of the satellite system, interference generators.

Such interferors may be of several different types, and may be broad band or narrow band; random or repetitive; high power or low power and so on.

EP 0519021 discloses a method of reducing interference between terrestrial and satellite communications systems by controlling the power levels in the terrestrial system.

WO 96/031016 discloses a method of preventing interference between two satellite systems by predicting the zone where interference will occur and inhibiting transmission into that zone by one of the systems.

An object of the present invention is to reduce the effects of interference, particularly in the user terminal uplink direction of a satellite communication system.

The present invention provides a satellite communications system arranged to utilise position data related to the spatial separation, relative to the satellite or satellites, of the user terminal and the or each said interference source, and to spatially filter the content of the user uplink signal in dependence upon the position data to improve the ratio of the uplink signal to the interference.

Preferably, two or more satellites are used, which may be in non-geostationary orbits, for example in a global coverage constellation or a satellite cluster.

The interference mitigation may be performed on the ground, or on a satellite.

Separated interference signals may be stored, and used in subsequent traverses of a non-geostationary satellite over the sources thereof.

The positions of such sources may be derived, using delay and/or Doppler shift measurements.

One or more interferors may be further user terminal signals.

Other aspects and preferred embodiments of the invention are as described or claimed hereafter, with advantages which will be apparent from the following.

### BRIEF DESCRIPTION OF THE DRAWINGS

Embodiments of the invention will now be described, by way of example only, with reference to the accompanying drawings, in which:
Figure 1 is a block diagram showing schematically the elements of a first communications system embodying the present invention;
Figure 2a is an illustrative is a block diagram showing schematically the elements of mobile terminal equipment suitable for use with the present invention; and
Figure 2b is a corresponding block diagram;
Figure 3 is a block diagram showing schematically the elements of an Earth station node forming part of the embodiment of Figure 1;
Figure 4 illustrates schematically the beams produced by a satellite in the embodiment of Figure 1;
Figure 5 illustrates schematically the disposition of satellites forming part of Figure 1 in orbits around the Earth;
Figure 6 is a diagram illustrating schematically the geometry of some interference sources;
Figure 7 is a diagram showing schematically the spectral distribution of frequency carriers on a user downlink beam;
Figure 8 is a diagram showing schematically the structure of a TDMA frame on one of the carriers of Figure 6;
Figure 9 is a diagram showing cross-correlation between two satellite uplink signals;
Figure 10 is a block diagram of interference mitigation means of a first embodiment forming part of an Earth station node of Figure 3;
Figure 11 is a block diagram of a spatial filter forming part of Figure 10;
Figure 12 corresponds to Figure 5 and illustrates schematically the disposition of satellites forming a satellite cluster in a second embodiment;
Figure 13 is a block diagram illustrating a correlator forming part of the first and second embodiments;
Figure 14 illustrates overlapping beams of different sizes;
Figure 15 is a block diagram of interference mitigation means of a third embodiment forming part of an Earth station node of Figure 3;
Figure 16 is a block diagram of a filter substituted for part of the third embodiment in a fourth embodiment;
Figure 17 shows a satellite ground track in relation to three points on the surface of the Earth; and
Figure 18 shows the corresponding Doppler shifts of signals from those points over time;
Figure 19 is a block diagram of interference mitigation means of a fifth embodiment forming part of an Earth station node of Figure 3;
Figure 20 is a graph of spectrum against time, illustrating the Doppler shift of spectra over time; and
Figure 21 is a flow diagram illustrating the operation of the fifth embodiment.

### GENERAL ASPECTS OF EMBODIMENTS

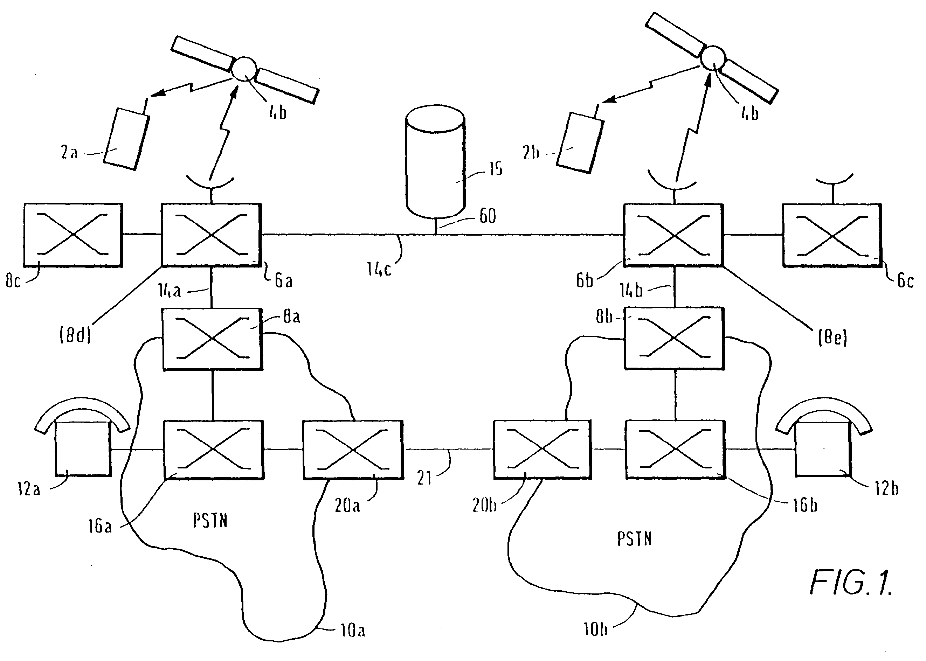

Referring to Figure 1, a satellite communications network according to this embodiment comprises mobile user terminal equipment 2a, 2b (e.g. handsets 2a and 2b); orbiting relay satellites 4a, 4b; satellite Earth station nodes 6a, 6b; satellite system gateway stations 8a, 8b; terrestrial (e.g. public switched) telecommunications networks 10a, 10b; and fixed telecommunications terminal equipment 12a, 12b.

Interconnecting the satellite system gateways 8a, 8b with the Earth station nodes 6a, 6b, and interconnecting the nodes 6a, 6b with each other, is a dedicated ground-based network comprising channels 14a, 14b, 14c. The satellites 4, Earth station nodes 6 and lines 14 make up the infrastructure of the satellite communications network, for communication with the mobile terminals 2, and accessible through the gateway stations 8.

A terminal location database station 15 (equivalent to a GSM HLR) is connected, via a signalling link 60 (e.g. within the channels 14 of the dedicated network) to the gateway station and Earth stations 6.

The PSTNs 10a, 10b comprise, typically, local exchanges 16a, 16b to which the fixed terminal equipment 12a, 12b is connected via local loops 18a, 18b; and international switching centres 20a, 20b connectable one to another via transitional links 21 (for example, satellite links or subsea optical fibre cable links). The PSTNs 10a, 10b and fixed terminal equipment 12a, 12b (e.g. telephone instruments) are well known and almost universally available today.

For voice communications, each mobile terminal apparatus is in communication with a satellite 4 via a full duplex channel (in this embodiment) comprising a downlink channel and an uplink channel, for example (in each case) a TDMA time slot on a particular frequency allocated on initiation of a call, as disclosed in UK patent applications GB 2288913 and GB 2293725. The satellites 4 in this embodiment are non geostationary, and thus, periodically, there is handover from one satellite 4 to another.

### Terminal 2

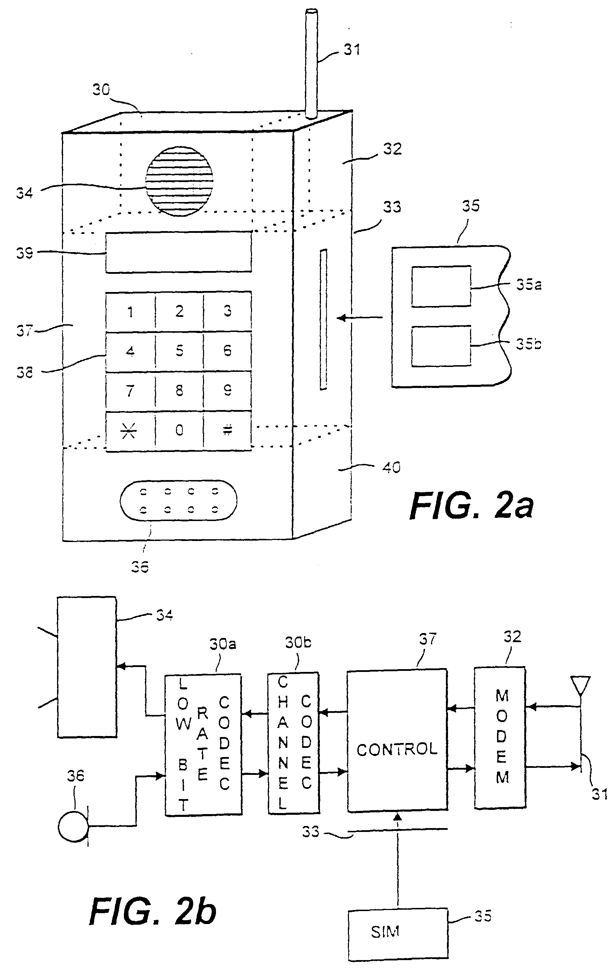

Referring to Figures 2a and 2b, a user terminal equipment 2a of Figure 1 is shown.

The terminals 2a, 2b may be similar to those presently available for use with the GSM system, comprising a digital low rate coder/decoder 30, together with conventional microphone 36, loudspeaker 34, battery 40 and keypad components 38, and a radio frequency (RF) interface 32 and antenna 31 suitable for satellite communications. A display 39 (for example a liquid crystal display) and a 'smart card' reader 33 receiving a smart card (subscriber identity module or SIM) 35 storing user information are also provided.

Specifically, the SIM 35 includes a processor 35a and permanent memory 35b.

Also provided is a terminal control circuit 37 (which may in practice be integrated with the coder 30) consisting of a suitably programmed microprocessor, microcontroller or digital signal processor (DSP) chip.

The control circuit 37 performs various functions including framing speech and data into TDMA time frames for transmission (and likewise demultiplexing received TDMA frames); and performing encryption or enciphering.

The coder/decoder (codec) 30 in this embodiment comprises a low bit rate coder 30a, generating a speech bit stream at around 3.6 kilobits per second, together with a channel coder 30b applying error correcting encoding, to generate an encoded bit stream at a rate of 4.8 kilobits per second.

The SIM memory 35b stores various subscriber identity data including the international mobile subscriber identity (IMSI), which is a unique number associated with that SIM (and hence the subscriber to whom it belongs).

### Earth Station Node 6

The Earth station nodes 6 are arranged for communication with the satellites.

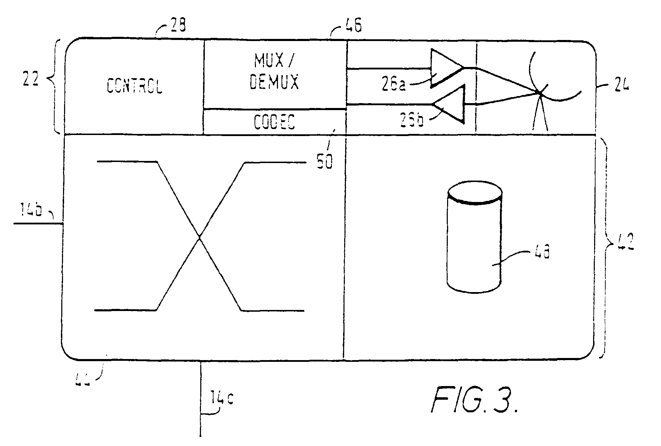

Each Earth station node 6 comprises, as shown in Figure 3, a conventional satellite Earth station 22 (functioning somewhat equivalently to the Base Station of a cellular system) consisting of at least one satellite tracking antenna 24 arranged to track at least one moving satellite 4, RF power amplifiers 26a for supplying a signal to the antenna 24, and 26b for receiving a signal from the antenna 24; and a control unit 28 for storing the satellite ephemera data, controlling the steering of the antenna 24, and effecting any control of the satellite 4 that may be required (by signalling via the antenna 24 to the satellite 4).

The Earth station node 6 further comprises a mobile satellite switching centre 42 comprising a network switch 44 connected to the trunk links 14 forming part of the dedicated network. It may be, for example, a commercially available mobile switch centre (MSC) of the type used in digital mobile cellular radio systems such as GSM systems. A multiplexer 46 is arranged to receive switched calls from the switch 44 and multiplex them into a composite signal for supply to the amplifier 26 via a low bit-rate voice codec 50. Finally, the Earth station node 6 comprises a local store 48 storing details of each mobile terminal equipment 2a within the area served by the satellite 4 with which the node 6 is in communication. The local store 48 acts to fulfil the functions of a visited location register (VLR) of a GSM system, and may be based on commercially available GSM products. Alternatively, satellite control may be a separate control station.

The gateway stations 8a, 8b comprise, in this embodiment, commercially available mobile switch centres (MSCs) of the type used in digital mobile cellular radio systems such as GSM systems. They could alternatively comprise a part of an international or other exchange forming one of the PSTNs 10a, 10b operating under software control to interconnect the networks 10 with the satellite system trunk lines 14.

The gateway stations 8 comprise a switch arranged to interconnect incoming PSTN lines from the PSTN 10 with dedicated service lines 14 connected to one or more Earth station nodes 6.

Also provided in the gateway stations 8 is a store for billing, service and other information relating to those mobile terminals 2 for which the gateway station 8 is the home gateway station.

The database station 15 comprises a digital data store which contains, for every subscriber terminal apparatus 2, a record showing the identity (e.g. the International Mobile Subscriber Identity or IMSI); the service provider station 8 with which the apparatus is registered (to enable billing and other data to be collected at a single point) and the currently active Earth station node 6 with which the apparatus 2 is in communication via the satellite 4.

Thus, in this embodiment the database station 15 acts to fulfil the functions of a home location register (HLR) of a GSM system, and may be based on commercially available GSM products.

Periodically, the Earth station nodes measure the delay and Doppler shift of communications from the terminals 2 and transmit these to the database station 15, which calculates the rough terrestrial position of the mobile terminal apparatus 2 using the differential arrival times and/or Doppler shifts in the received signal, and knowledge of which beams of which satellites 4 the signal was received through. The position is then stored in the database 48.

### Satellites 4

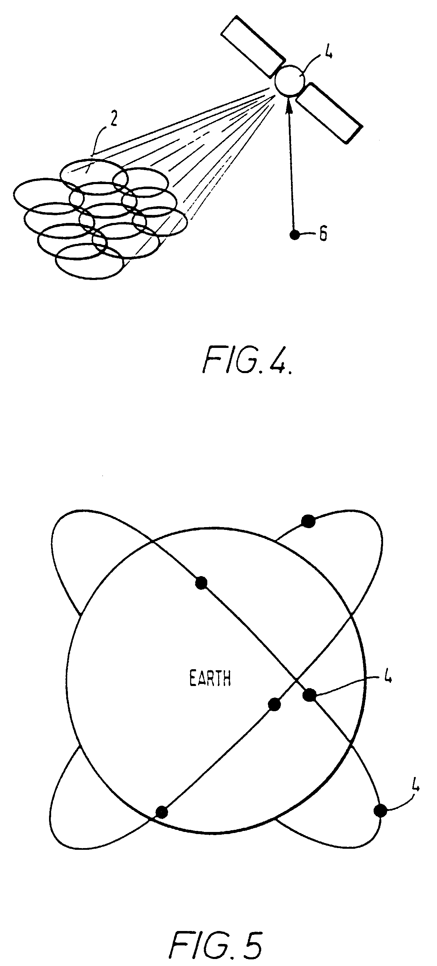

The satellites 4a, 4b comprise generally conventional communications satellites such as the HS601 available from Hughes Aerospace Corp. California, US with a communications payload, and may be as disclosed in GB 2288913. Each satellite 4 is arranged to generate an array (typically hexagonal) of beams covering a footprint beneath the satellite, each beam including a number of different frequency channels and time slots, as described in GB 2293725 and illustrated in Figure 4.

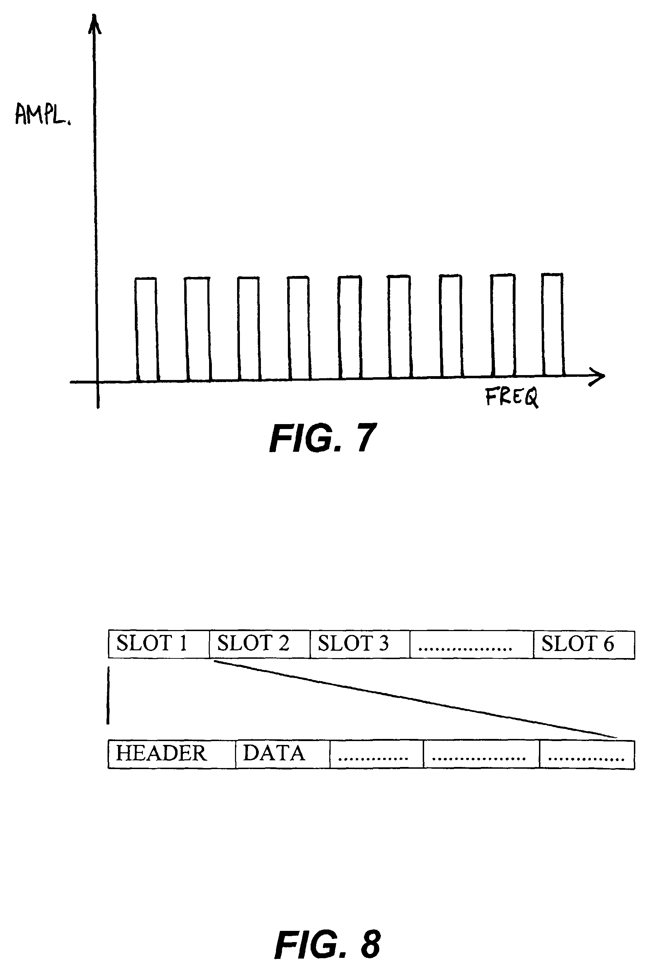

On each beam, the satellite therefore transmits a set of user downlink frequencies as shown in Figure 7. The frequencies are separated by a frequency guard band. The downlink frequencies on adjacent beams are different, so as to permit frequency re-use between beams. Each beam therefore acts somewhat in the manner of a cell of a conventional terrestrial cellular system. For example, there may be 61, 121 or 163 beams. The frequencies are allocated between satellites such that within each plane, neighbouring satellites use different frequencies at those of their beams which overlap and satellites from one plane use different frequencies than those used by satellites of the other plane.

Similarly, each satellite is arranged to receive radiation in an array of beams, which in this embodiment cover the same footprints beneath the satellites, to provide a plurality of user uplink beams each carrying different frequencies.

In this embodiment, referring to Figure 8, each uplink and downlink frequency carries a plurality (e.g. 6) of time division channels, so that each mobile terminal 2 communicates on a channel comprising a given time slot in a given uplink and downlink frequency. The time slots are separated by a short guard interval.

Within each beam there is also provided a downlink common broadcast control channel (equivalent to the broadcast common control channel or BCCH of the GSM system) which occupies at least one of the frequencies for each beam; the frequencies used by the broadcast control channels of the beams are stored within each mobile terminal 2 which is arranged to scan these frequencies.

The satellites of this embodiment function as repeaters. Each satellite acts as a "bent pipe", amplifying and relaying signals from the user terminals 2 on the user terminal uplink, to the Earth station nodes 4 on a feeder downlink. Also (although it is not germane to this invention) signals from the Earth stations 4 on a feeder uplink are relayed down to the user terminals 2 on a user downlink.

Every frequency/channel in the user uplink therefore has an equivalent channel in the feeder downlink, and the satellite payload operates in accordance with a predetermined routing table, to translate a user link frequency from one of the user uplink beams (e.g. at round 2 GHz) to an equivalent frequency channel in the feeder downlink (e.g. at 5 or 7 GHz). The satellite performs amplification of the user uplink signal, in this embodiment at an intermediate frequency. The user uplink signals are not, however, digitally decoded and then remodulated. Thus, RF information such as delay and Doppler shift is preserved in the feeder downlink signal reaching the Earth station node 6.

The position of each satellite is known to a high degree of accuracy, using Earth based observations and/or by the use of a global positioning system (GPS) receiver in each satellite 4. The movement of each satellite, defined by the parameters of its orbit (the ephemeris) therefore enables each Earth station node 6 to know where the satellite is, and where it will be in future.

From a knowledge of the shape of the Earth (the polar and equatorial radii, for example) and the satellite orbits, the satellite Earth station node 6 can calculate position data of a transmitting source from its signal propagation delay and its Doppler shift in the uplink signal.

The satellites 4a are arranged in a constellation in sufficient numbers and suitable orbits to cover a substantial area of the globe (preferably to give global coverage).

For example 10 (or more) satellites may be provided in two mutually orthogonal intermediate circular orbits (or more) at an altitude of, for example, about 10,500 kilometres (6 hour orbits) and equatorial inclinations of 45°, as shown in Figure 5. Equally, however, larger numbers of lower satellites may be used, as disclosed in EP 0365885, or other publications relating to the Iridium system, for example.

Thus far, the operation of the invention corresponds generally to an adaptation to the satellite environment of the terrestrial GSM system.

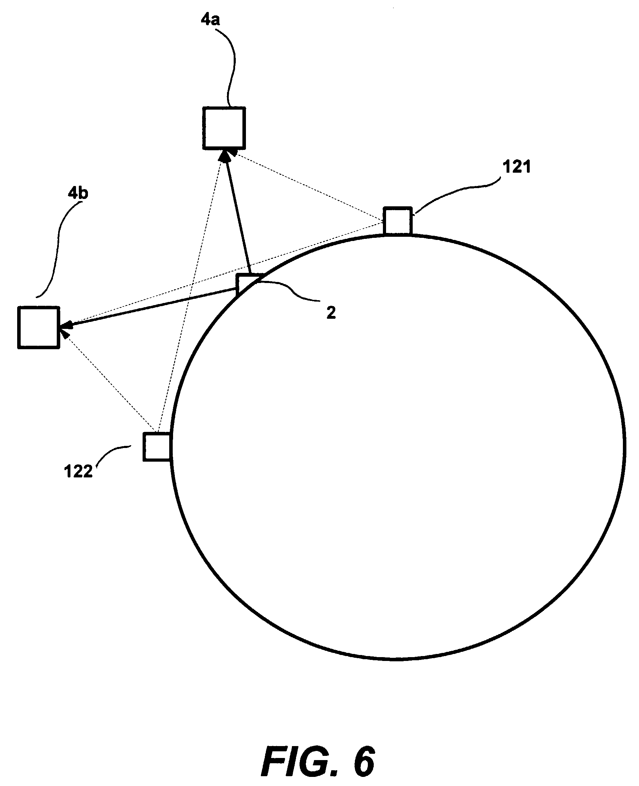

Referring to Figure 6, the effects of two interferors 122, 121 are shown on a system comprising a mobile terminal 2 and a pair of satellites 4% 4b. The interferors may be, for example, television broadcasting stations, terrestrial mobile communications base stations; terrestrial fixed link microwave repeaters; or terrestrial mobile communications terminal equipment. In general, a priori knowledge of the position of at least some of the interferors 121, 122 is not available.

Each of the satellites 4a, 4b is moving overhead with a substantial velocity over the ground. The effect of this is that, at any instant, the signals from the user terminal 2 and the interferors 121, 122 will be exhibiting an amount of Doppler shift which depends upon their distance in front of, or behind, the sub-satellite point on Earth, and upon their lateral distance from the sub-satellite track of the satellite across the Earth.

Additionally, the signal from each interferor will be delayed by an amount which depends upon the slant path from the transmitter to the satellite, which in turn is a function of the satellite altitude (which is fixed), the radius of the Earth and the distance of the transmitter from the sub-satellite point.

Unless the interference source 121 or 122 is exactly located at the same position as the user terminal 2, both the delay and Doppler shift of the component signals from the two will be different.

Referring once more to Figure 6, at the time shown, the satellites 4a and 4b are both receiving the signal from the user terminal 2, and from each of the interferors 121 and 122.

However, it is apparent that for the satellite 4a, the signal from the user terminal 2 is the least delayed, followed by that from the interferor 121 and then that from the interferor 122.

On the other hand, for the satellite 4b, the signal from the interferor 122 is the least delayed, followed by that from the user terminal 2, followed by that from the interferor 121.

Thus, the signal which is supplied on the feeder downlink from the satellite 4 to the Earth station 6 is made up of a component signal from the user terminal 2, a component signal from the interferor 121, a component signal from the interferor 122, component signals from other user terminals or interferors, and background noise.

According to the present invention, the use of two or more satellites enables the spatial separation between the different transmitting sources to be used to provide a spatial filter which separates out the wanted signal from spatially separate interferors.

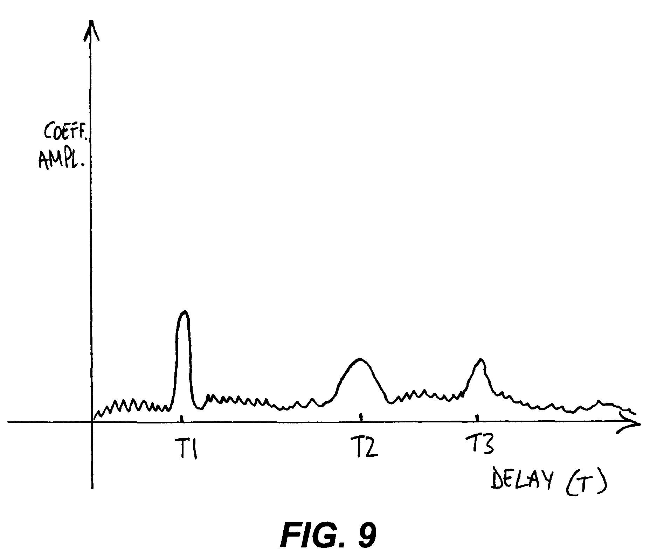

Referring to Figure 9, the cross correlation function of the signals received from the two satellites is shown. Cross correlation, as is well known in the art, is the operation of taking, for each of a range of delays, the value of a first signal and of a second signal delayed by the delay amount, summed over all time.

Where two signals are time-aligned, the sum of the product of the two signals over time is large thus, two signals containing common signal components will exhibit peaks in their cross correlation output (spectrum) at the values of delay which result in time alignment of the common signal components.

Referring now to Figure 9, in the case of the signals from the two satellites 4a, 4b, if the two signals from the satellites are cross correlated, peaks in the cross correlation output are seen as delay times T1, T2 and T3. Delay time T1 corresponds to the time by which the signal from the satellite 4a has to be delayed to bring the component signals from the user terminal 2 in the two satellite link signals into time alignment; T2 is the delay for bringing the signals from the interferor 121 into alignment and T3 is that for bringing the signals from the interferor 122 into time alignment.

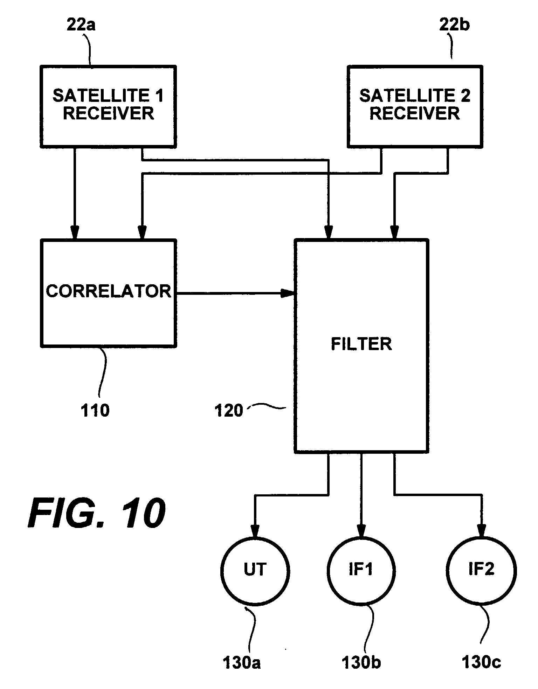

Referring to Figure 10, signal processing apparatus for utilising this possibility for separation of the signals will now be described.

At the Earth station node 6, first and second satellite tracking antennas 24 each track one of the satellites 4a, 4b and the demultiplexed signal corresponding to one frequency carrier produced by each of demultiplexers 46a, 46b from the corresponding signal from the satellites 4a, 4b is supplied to a respective port of a cross correlator 110, and a filter 120.

The cross correlator 110 performs a cross-correlation of the signals from the two satellite receivers 22a, 22b, across a time window extending, from the present, backwards a predetermined period of time (for example a predetermined number of seconds). The predetermined period of time is sufficiently short that the relative positions of the satellite and the transmission sources has not changed substantially; it will therefore in general be shorter for lower orbit satellites.

The output of the cross correlator 110 comprises a series of different time delay values T1, T2, T3, each corresponding to a detected peak in the cross correlation output. For example, the correlator 110 may supply the time delays corresponding to the N highest amplitude peaks in the cross correlation output (sometimes referred to as the correlation spectrum), corresponding to the strongest, most coherent transmitted sources, or may supply time delays corresponding to any peaks in the cross correlation output over a predetermined level.

The output of the filter 120 is a plurality of (spatially separated) output signals at respective ports 130, 130b, 130c. One of these will signal from the user terminal 2, and the other two will correspond to the signals from the interference sources 121, 122.

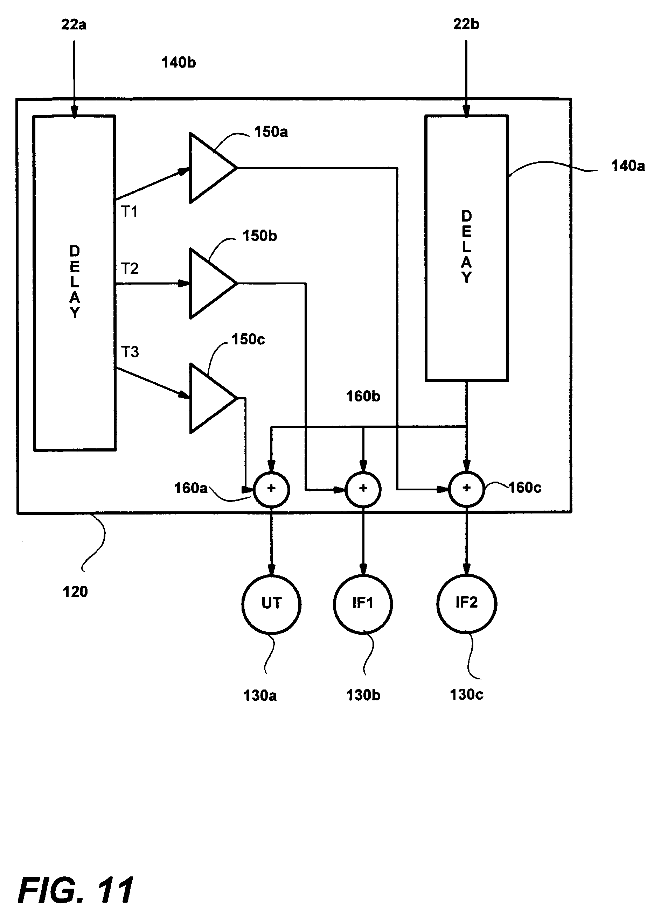

Referring to Figure 11, the filter 120 comprises a delay line 140a, 140b for each of the satellite signals. One of the delay lines 140a, is of fixed length, and the other (or in general, others) have plural taps at delay lengths selected in accordance with the delays T1, T2, T3 supplied from the correlator 110.

The tapped signals are then supplied via amplifiers 150a 150b, 150c to adders 160a, 160b, 160c at which the signal from the first delay line 140a is also supplied.

Thus, denoting the signals from the two satellites as S1 (t) and S2(t), the output of the first adder 160a is S1(t) + G1.S2(t+T1); that of the second adder 160b is S1(t) + G2.S2(t+T2); and that of the third adder S1(t) + G3.S2(t+T3).

It will be apparent that the effect of this processing is to cause the corresponding component signals within the two satellite beams to be added coherently, so that at each of the output ports 130, a signal is generated comprising the coherent sum of one component signal from each of the satellite downlink signals, the other component signals being added incoherently. The signal to noise ratio of each of the component signals at the output ports 130 is thereby increased.

It will also be apparent that the above described process corresponds essentially to a two element phased array, the two elements being the respective satellites 4a, 4b, and the different phasing supplied by the cross correlator 110 being such as to synthesise three different beams, one pointing at each of the user terminal 2, and the two interference sources 121, 122, so as to perform spatial filtering, and thus separate the component signals transmitted by these three sources in dependence upon their directions from the satellites (and hence positions upon the Earth).

Where three satellites 4a, 4b, 4c (not shown) are available, as will often be the case with the constellation described above, three delay lines (two of which are tapped) are provided within the filter 120 and each of the adders 160 receives signals from each of the three satellites, differently delayed to time align the corresponding component signals from the user terminal 2 and interferors 121, 122. This permits the separation of interference sources in two dimensions, and further increases the signal-to-noise ratio.

The cross-correlator 110 does not need to operate continuously; an initial cross-correlation operation is necessary in order to detect all significant interference peaks in the cross-correlation output and derive the associated delay times, which correspond to the relative positions on Earth (or, at any rate, directions from the satellite) of the transmitting sources 2, 121, 122. The cross-correlation operation may then be repeated periodically, at periods related to a fraction of the orbital period of the satellites so that the satellites have not moved too far. Additionally or alternatively, where the positions on Earth of the transmission sources have been calculated, the (known) movement of the satellites is used to calculate the delay times for the spatial filter, assuming the transmission sources 2, 121, 122 to be stationary.

Additionally or alternatively, tracking filters may be provided, to continually test the effects of varying the delays T1, T2, T3 initially detected by the cross-correlator 110 so as to maintain maximum amplitudes of the outputs at ports 130a, 130b, 130c.

### Identification of the user terminal signal

At this stage, several transmitted signals have been spatially separated, but their identities have not yet been established.

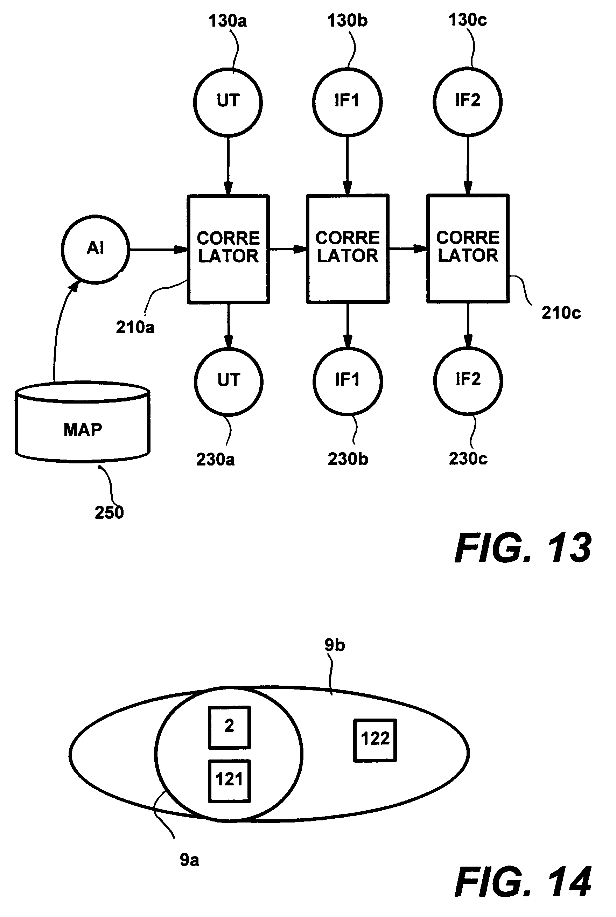

Referring to Figure 13, this is achieved by providing, connected to each of the output ports 130a-130c, a cross-correlator 210a-210c. Each of the correlators also receives, as an input, a signal representative of the frequency and time frame structure (or, in more general terms, the air interface) of the signal from the user terminal generated by an air interface generator.

It may consist of a signal occupying a TDMA channel, prefixed by any predetermined start bits or synchronisation bit sequences which would be present in a signal from a user terminal, and containing some representative sequence of bit values (for example all zero or all one bits) in the correct timing with the correct intervals between bits. It is synchronised to the user downlink transmissions generated at the node 6.

Such a sequence will, obviously, not usually match perfectly the actual signal received from a user terminal since the data bits received from the user terminal would have different values. However, there will in general be a detectable degree of correlation between the two since the transitions between bits will occur at the same times and some of the data (for example header or training data) will match. At any rate, the correlation will be higher for a signal from a user terminal 2 than for a signal from a interference source 121, 122.

Accordingly, the output of each of the cross-correlators 210a, 210b, 210c will contain a peak only for those cross-correlators which have received a user terminal signal at the corresponding filter output ports 130a-130c. Each of the cross-correlators 210 therefore generates an output signal indicating the identity of the signal it has correlated as either a user terminal signal, or an interference signal at a port 230a, 230b, 230c.

As a result, the following data is available:
1. A set of spatially separated interfering component signals, each appearing at a filter output port 130a-130c.
2. A corresponding delay time (T1-T3).
3. An identification (i.e. label) of some of the signals, at least as being from a user terminal, or not (i.e. as being from a interferor).

This data effectively forms a map of the transmission sources, since the delay times can, with knowledge of the satellite orbits (which is always available to a high degree of accuracy) and the geometry of the Earth surface (which is similarly available) be converted into positional co-ordinates where data from three or more satellites is available (or data from two satellites is available over a period of time). The position data, and associated label data made available at the ports 230 identifying the source as either a user terminal or interference, is stored within an interference map database 250.

Having identified the position of the interferors 121, 122 and user terminal 2, the Doppler shift caused due to the movement of the satellite can be calculated, since it's motion is known. This calculated Doppler shift is then applied to each of the spatially separated component signals.

### Positive identification of interference generators

Where the identity of one or more interference generators 121, 122 is known, equivalent data can be stored within the interference map database 250. For example, where the position of a powerful radio transmitter such as a radar site, a radio astronomy site, or a television repeater is known, then the interference map database 250 can store data defining the position thereof, and data characterising the air interface thereof, in the form of a stored signal sequence covering at least one cycle or sweep of the signal in question (or an averaged version taken over several cycles thereof or corresponding spectra).

Thus, the apparatus of Figure 13 can similarly be used to identify components signals as corresponding to interference sources, by supplying the stored signal at the air interface generator 210a from the interference map database 250, to determine whether there is a correlation between it and any of the separated component signals at the ports 130a-130c.

Where such a correlation is found, a label is generated identifying the separated component signal at that port as being interference, and specifying the type of interference (i.e. by reference to the stored signal to which it correlated).

Preferably, the position information stored in the interference map database 250 is also used to determine whether the delay time derived by the cross correlator 110 for that component signal is compatible with the stored position for the interference generator with which the component signal correlates.

In the event that the component signal corresponds to a stored interference signal, but not to the corresponding stored positional data, as would occur for example if an interference source had moved, a new entry is recorded in the interference map database 250.

For separated signal components which do not correlate with any user terminal or interferor stored in the interference map database 250, a spectral analysis is performed over time and, if a consistent spectrum is detected, a representation of the component signal is stored in the interference map database 250, together with positional data specifying its position on Earth, derived insofar as is possible from the orbital position and motion of the satellites 4a, 4b and the delay signal calculated by the cross correlator 110.

Thus, the interference map database 250 maintains a collection of records for interference sources, with information indicative of the position of, and the signal generated by, each source.

It may also include data derived from other sources, such as a spare satellite (as described in our earlier European application 9797300736.2 filed 5 February 1997, applicant's reference IDEA 56). This position data is used together with the satellite orbit data to calculate the necessary delays for the spatial filter, assuming the transmission sources 1, 121, 122 to be static relative to the (moving) satellite 4.

### Beam size correction

Due to the spherical curvature of the Earth, the "footprint" of different beams generated by the satellites 4 on the Earth vary in size. The centremost beam, encompassing the sub satellite point below the satellite, is circular, whereas beams towards the edge of the pattern become progressively more elongated.

Thus, referring to Figure 14, where a user terminal 2 lies within a first beam 9a which is relatively directly below a first satellite 4a, and a second beam 9b which is towards the periphery of the beam pattern of a second satellite 4b, it may suffer interference from two interference sources 121, 122 in the relatively large area covered by the peripheral beam 9b, but only one within the relatively small area of the beam 9a.

Interferors such as 122 which are only within one of the beams will, however, also be present within a different beam of the first satellite 4a or another satellite 4b or 4c, from which it is possible to derive delay or other data which characterises the position of the interferor 122 sufficiently to allow it to be separated from the downlink signal from the beam 9b, even though it does not contribute to the beam 9a.

In other words, in order to improve the spatial separation of a wanted signal which occurs in two beams 9a and 9b of two satellites 4a and 4b, and is interfered with in one of those beams by an interferor which is not present in the other, the satellite Earth station node 6 determines (from the satellite ephemeris data), all other beams with which the beam 9b overlaps in regions of the Earth where the beam 9a does not, and cross correlates a signal from the beam 9b with such other beams, to derive positional information to spatially separate that interferor 122.

Equally, where the interference map database 250 stores a record of an interference source in the footprint of a beam 9b but not a beam 9a with which it overlaps, and with which it is being cross correlated, the associated stored signal thereof is cross correlated with the signal from the beam 9b to determine whether a corresponding signal component is present and, if so, to determine its time-alignment to enable it to be separated and cancelled from the signal in the beam 9b.

The effect of these steps is to reduce the area of the beam 9b over which the above described interference cancellation spatial filtering is performed, to match as closely as possible that of the beam 9a (the smaller beam).

It will be apparent that, whereas the beam 9b of Figure 14 encompasses the beam 9a, the same techniques are applicable where two beams only partially overlap.

Such techniques may generally be referred to as "spatial Boolean cutting operations".

Periodically, a satellite beam 9 (and, eventually, the satellite 4) will pass out of range of a given user terminal 2, and of each interference source 121, 122, and/or another will come into range. The position data of each transmitter is, however, stored and re-used, regardless of which satellites are used in the spatial filter.

### SECOND EMBODIMENT

In the preceding embodiment, different satellites of a constellation of satellites were employed to provide the receivers for a spatial filter. In this embodiment, different satellites of a so-called "cluster" of satellites are employed.

Satellite clusters are described in, for example, "Satellite Clusters", P.S. Visher, Satellite Communications, September 1979, pages 22-27; or "The Geometry of Satellite Clusters", J. Walker, Journal of the British Interplanetary Society, Vol. 35, pages 345-354 (1982), or "Development Trends in Europe on Satellite Clusters and Geostationary Platforms", Renner and Nauck, AIAA - 84-0703, pages 622-628 (1984), all of which are incorporated herein by reference in their entirety.

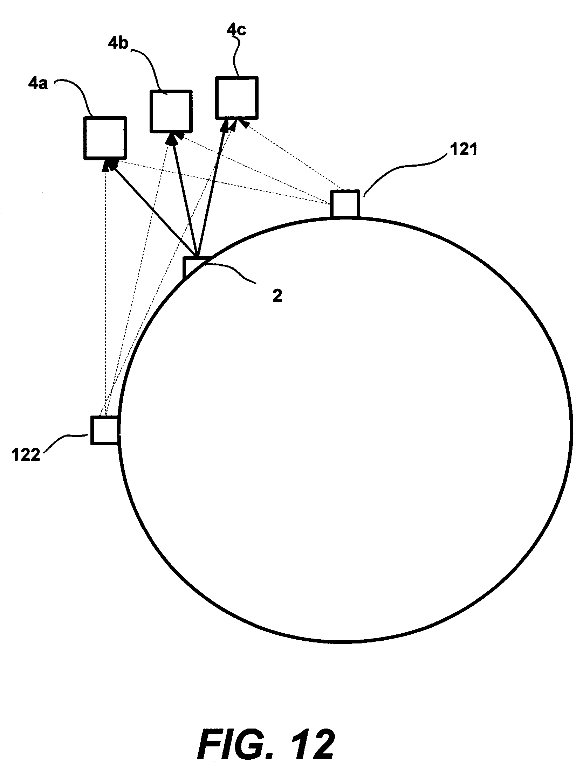

A satellite cluster comprises a group of satellites in closely spaced positions in the same orbital plane, each having an antenna, as illustrated in Figure 12. For the satellites of the satellite cluster, the spatial separation between the satellites is typically substantially smaller than the separation between satellites of a constellation as in the first embodiment.

Accordingly, this embodiment of the invention may be practised at shorter wavelengths. Further, the satellites of the cluster may be manoeuvred into fixed orbital positions in the orbital plane relative to each other and maintained there by thruster motors, so as to provide a regular spaced array of satellites.

In this embodiment, the spatial filter may operate as in the first. Alternatively, the satellites may be interconnected via, for example, laser intersatellite links or microwave intersatellite links, or even by a physical cable, and the signal processing apparatus of Figures 10 and 11 may be provided in space, in one of the satellites.

This may comprise a "parent"" satellite, from which "offspring" satellites are deployed in orbit after launch.

### THIRD EMBODIMENT

### Interference subtraction

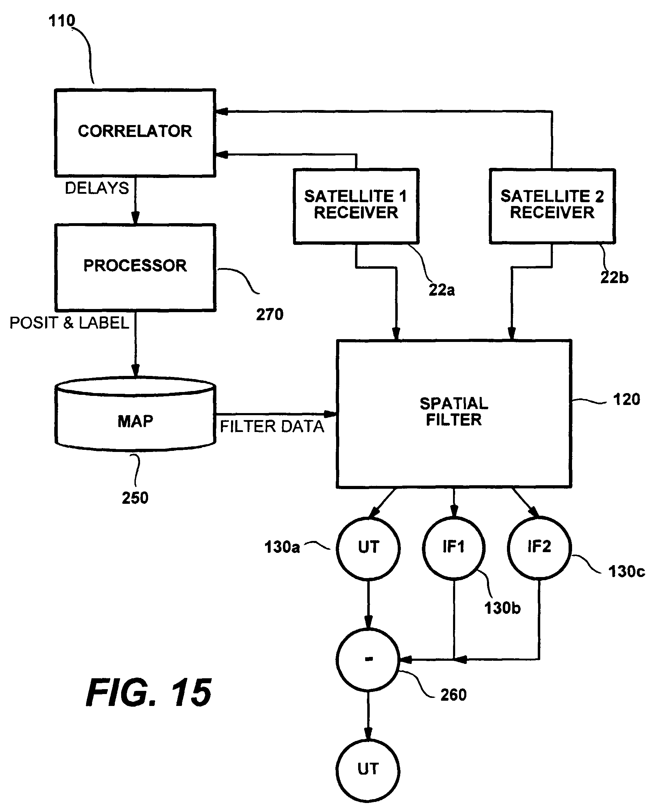

Referring to Figure 15, as described above, the correlator 110 extracts delay times corresponding to detected correlation peaks between signals from different satellites 4a, 4b, 4c and supplies these to a processor 270 arrange to extract positional information characterising the position on Earth of the interference sources, together with a label indicating that they are interference sources and, where available, data identifying the signal format (i.e. the spectrum or air interface format of the interference), which is stored in an interference map database 250 and periodically updated.

The delays are supplied as filter data to the spatial filter 120, which produces separated outputs 130a-130c representing different component signals of the satellite user uplinks (replicated in the satellite feeder downlinks to the satellite Earth station node 6).

The separation of the component signals is not, however, perfect (since the resolution of the spatial filter is not perfect), and so the component signal corresponding to the user terminal, at port 130a, will still contain some of the interference component signals at a lower level. To further reduce the level of these, the other separated component signals at the ports 130b, 130c are subtracted at a subtractor 260 from the user terminal component signal at the port 130a.

### FOURTH EMBODIMENT

### Adaptive cancellation filter

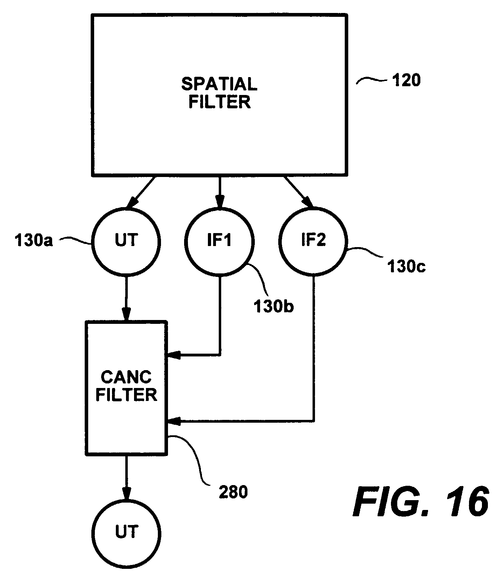

Referring to Figure 16, in this embodiment, the subtraction of the preceding embodiment is improved by providing that the subtractor 260 of the preceding embodiment is replaced by an adaptive cancellation filter 280. The cancellation filter 280 filters the user terminal signal from the port 130a, using the interference component signals at the ports 130b, 130c to minimise the levels of those interference signals in the output of the filter. It is therefore analogous to the operation of an echo canceller in minimising the level of echos in its output signal.

For example, the cancellation filter 280 may continuously generate the coefficient of a pair of inverse filters, each having a response the inverse of that of the spectrum of one of the interference component signals at the ports 130b, 130c, using for example either an adaptive error minimisation technique or an LPC (linear predictive coding) coefficient calculation technique.

The interference component signals are not perfect replicas of the transmissions generated by the interferors 121, 122 due to noise and imperfect spatial separation, but providing a cancellation filter based on the component signals nonetheless improves the signal to interference ratio, and hence the signal to noise ratio, in the user terminal component signal.

The cancellation filter 280 may take into account the air interface spectrum of the user terminal signal as indicated above (although it cannot take into account the user terminal signal itself since the data carried is unknown), to maximise the separation between the air interface spectrum of the user terminal and the spectra of the interference components signals at the ports 130a, 130b, rather than merely minimising the latter.

### FIFTH EMBODIMENT

### Doppler shift change

In addition to the use of delay information, described in the above embodiments, to provide positional data, it is also possible to utilise Doppler shift data to do so. The positional data thus extracted is, in this embodiment, used in addition to, or instead of, the delay data derived by cross correlation in earlier embodiments, to control the operation of the spatial filter in separating the component signals received by the satellites 4a, 4b.

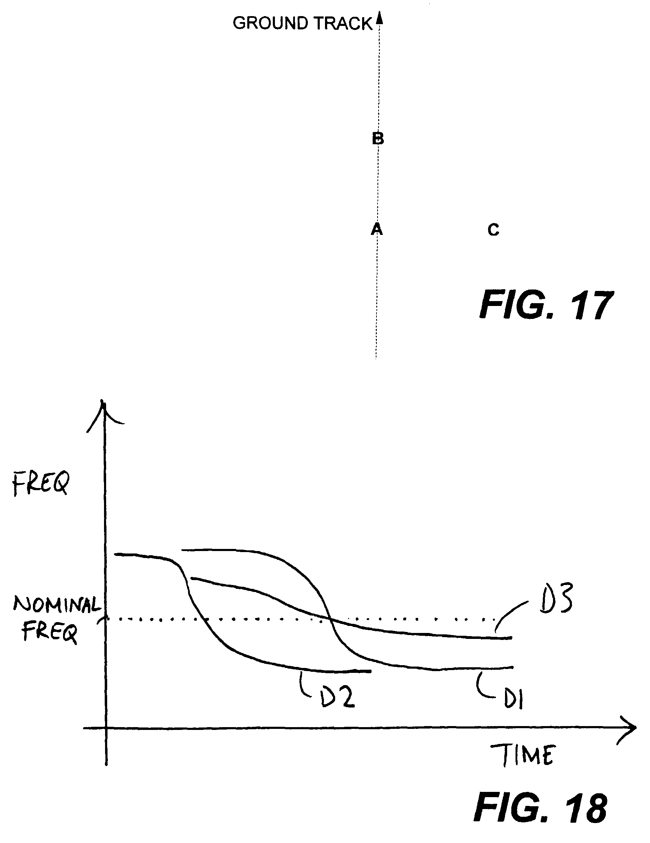

Referring to Figure 17, the profiles of the Doppler shift experienced by signals transmitted by three points A, B, C on the ground as a satellite 4a passes over are shown.

A first trace D1, corresponds to a point A on the track of the satellite. In this case, as the satellite approaches, and then passes overhead, there is a relatively steep change in Doppler shift.

For a point B, located on the ground on the satellite ground track but displaced along the ground track forward of the point A, the same Doppler shift behaviour over time is shown in trace D2, but displaced in time.

For a point C located spaced of the satellite ground track from the point A, a Doppler shift pattern D3 aligned in time with that of the point A but having a less steep transition is measured.

It will be seen that the progressive change in Doppler shift over time of a terrestrial transmitter (such as a user terminal or interferor), characterises both the distance along the ground track, relative to the sub satellite point, and the displacement from the ground track thereof.

Thus, by measuring the Doppler shift behaviour over time of a received signal component, the position of that signal component can be determined, except that there is an ambiguity as to whether the point lies on the left or the right of the ground track, which is resolved by the identity of the beam in which the signal was received.

This technique may be practised to locate the position of a signal component detected only by a single satellite, rather than multiple satellites as the preceding embodiments. It may also be used to improve the positional information derived from a limited number (for example, 2) of satellites in the preceding embodiments.

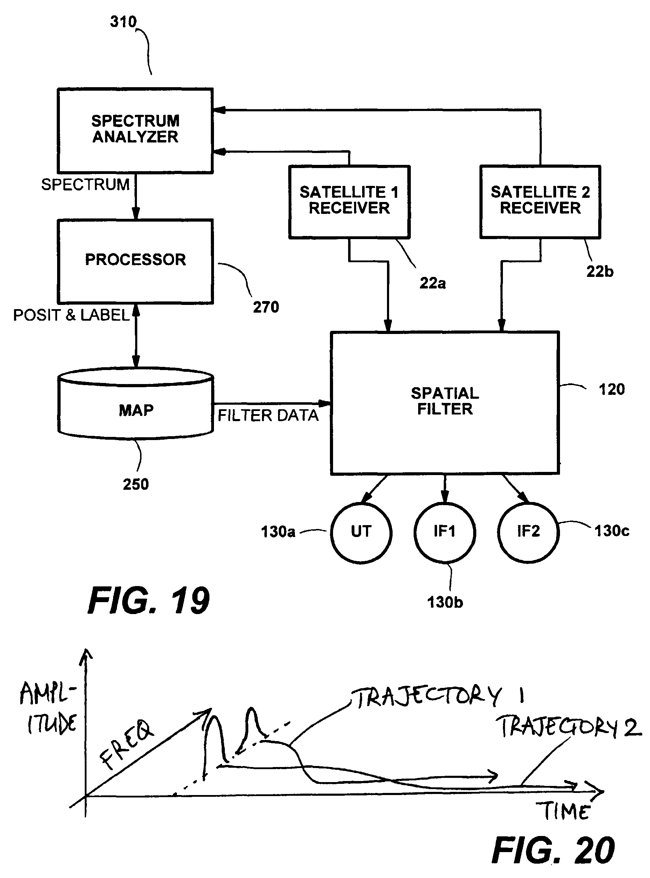

Referring to Figure 19, in this embodiment, the cross correlator 110 of preceding embodiments is replaced with (or augmented by the addition of) a spectrum analyser 310. The spectrum analyser is arranged to repeatedly sample the user downlink signal and to form a high resolution spectrum at each sampling instant. The spectrum contains both real and imaginary components (i.e. both phase and amplitude information) and is obtained, for example by a transform such as Fourier transform.

The spectra are supplied to a processor 270 comprising a DSP or microprocessor device and associated memory.

Referring to Figure 20, the spectrum at any instant (only one component of the spectrum is illustrated) comprises a section through the spectrum over time. Two signals, such as a signal from the user terminal 2 and a signal from an interferor 121, will each have some constant spectral characteristics. At any moment in time, the signal spectra will be displaced along the frequency axis by an amount which corresponds to the Doppler shift between the transmitting source (user terminal or interferor) and the satellite 4; and between the satellite 4 and the Earth station node 6. The positions of the satellite 4 and earth station node 6 are known to a high degree of accuracy.

The processor 270 is arranged to compare the air interface spectrum data for the user terminal and any interferors, stored within the interference map database 250, with the spectrum supplied by the spectrum analyser 310 at each sampling instant. The processor 270 may, for example, be arranged to execute a neural network algorithm such as a multi-layer perceptron algorithm, or a fuzzy-logic recognition algorithm. Characteristic spectral features such as the presence of two or more peaks separated by predetermined frequency intervals may be used.

Also, spectral components which are moving in the same trajectory (i.e. whose Doppler shift change over time is the same) are detected and associated together. Each such associated set of components is compared to the air interface spectra of the user terminal 2, and known interference sources stored in the database 250.

If it does not correspond to these, it is treated as a new interference source, and a new entry in the database 250 is made.

Whilst it is not in general possible to separate the user terminal signal merely by examining their spectra (or else spectral filtering would suffice to remove the interferor), it is possible to detect the presence of predetermined interference signals, the spectra of which are stored within the interference map database 250 and user terminal signals.

It is therefore also possible to detect, at each sampling interval, the amount by which the recognised spectra are offset due to their instantaneous Doppler shift.

Accordingly, the processor 270 detects the presence of each user terminal and interference signal, and tracks the Doppler shift of each over time, to produce, for each component signal detected, a Doppler shift trace similar to that of Figure 18. By comparing the trace for each separated signal component with a plurality of predetermined stored traces, or by fitting a polynomial through the detected traces and determining the parameters of the polynomial, the position of each of the generators of the detected component signals (i.e. the user terminal 2 and each interferor 121, 122), in terms of their position along the satellite ground track and away from the satellite ground track, are detected and converted to a position on the Earth.

This positional data is then converted by the processor 270 into delay values, as described above, to configure the spatial filter 120, to separate out the signal from the user terminal and each of the interferors, for subsequent processing as in the above described embodiments.

Thus, in this embodiment, where signals from multiple satellites are available but it is not possible accurately to derive positional information merely on the basis of correlation analysis or other analysis of the relative delays, Doppler shift information can be used to position the component signal sources.

If the user terminal signals cannot be demodulated with an acceptably low bit error rate, the user terminal signal at the port 138 is correlated with each of the interference signals at the port 130b, 130c...... and, if a correlation is found, the interference signal with which the correlation is found (delayed by an amount corresponding to the delay in the cross- correlation output, and scaled by an amount corresponding to the amplitude of the cross-correlation peak) is subtracted from the desired signal as disclosed in relation to Figure 15. This subtraction is performed for each interference signal which correlates to the user terminal signal.

If no signal is found which correlates to the air interface of a user terminal, but signals are found which correlate to interference sources, the separated interference signals are subtracted from the received signal, leaving a residuum consisting of noise, and unseparated signals including any user terminal signal present. A further attempt is then made to recognise and demodulate a user terminal signal from this.

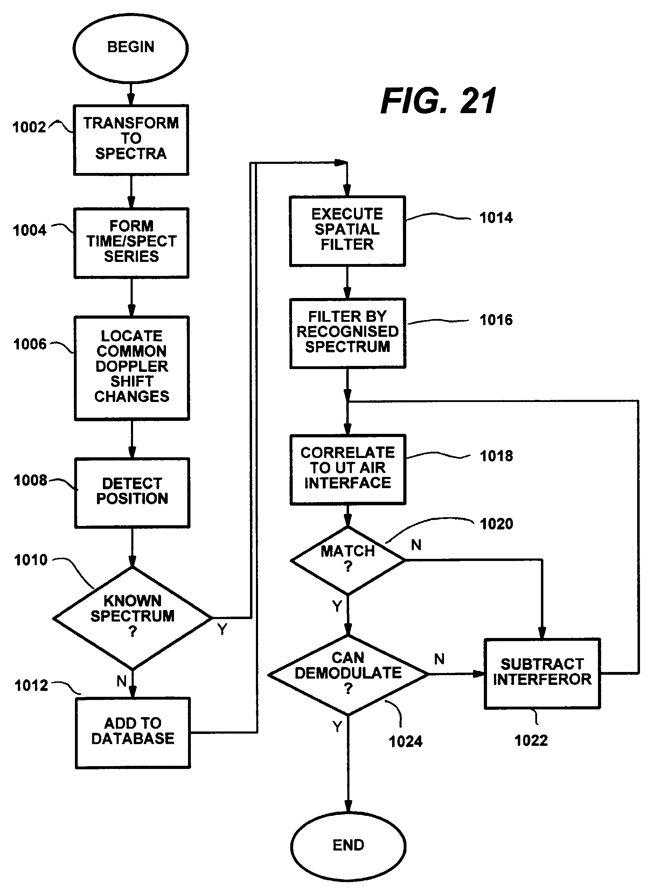

These steps are summarised in Figure 21. For each beam of each satellite, in step 1002, the received signal is transformed to yield the signal spectrum, using for example a Fourier transform.

In step 1004, the newly transformed spectrum is added to the spectra to form a time series of spectra. In step 1006, the processor locates common Doppler shift changes, to separate out the component signal. In step 1008, the progression of Doppler shifts over time (i.e. the trajectory in frequency) of each separated component signal is used to determine the position of the corresponding signal generator.

At this point, the actual value of the Doppler shift is calculated, and each component signal is adjusted by subtracted the calculated amount of Doppler shift, to bring it back to its nominal frequency.

In step 1010, the spectrum of each signal is compared with the stored spectra in the database 250. If it is not identified as corresponding to one of the stored spectra, it is added to the database 250, labelled as interference, in step 1012.

In step 1014, spatial filtering is performed, using the derived positions, to produce spatially separated component signals. In step 1016, each such separated signal is spectrally filtered in accordance with the stored air interface spectrum stored in the database 250.

In step 1018, each is correlated to the stored user terminal air interface spectrum, to identify which (if any) corresponds to a wanted signal. If they match (step 1020), an attempt is made (step 1024) to demodulate the signal from the user terminal and, if it is successful, the spatial filter is retained, the delay times used in the spatial filter being periodically changed based on the (known) movement of the satellite.

If the user terminal signal cannot be demodulated to a satisfactory bit error rate, or if (step 1020) no user terminal signal spectrum was found in the separated spatial outputs, then in step 1022 each of the detected interference signals is correlated against the user terminal signal (or, where no such signal was detected, the beam as a whole), and is subtracted therefrom where the two correlate. For this purpose, the separated signals prior to Doppler shift compensation are used.

A further attempt is then made to demodulate the signal (step 1024).

### OTHER EMBODIMENTS

It will be clear from the foregoing that the above described embodiment is merely one way of putting the invention into effect. Many other alternatives will be apparent to the skilled person and are within the scope of the present invention.

The numbers of satellites and satellite orbits indicated are purely exemplary. Smaller numbers of geostationary satellites, or satellites in higher altitude orbits, could be used; or larger numbers of low Earth orbit (LEO) satellites could be used. Equally, different numbers of satellites in intermediate orbits could be used.

Although TDMA has been mentioned as suitable access protocol, the present invention is fully applicable to other access protocols, such as code division multiple access (CDMA) or frequency division multiple access (FDMA).

Equally, whilst the principles of the present invention are envisaged above as being applied to satellite communication systems, the possibility of the extension of the invention to other communications systems (e.g. digital terrestrial cellular systems such as GSM) is not excluded.

It will be understood that components of embodiments of the invention may be located in different jurisdictions or in space. For the avoidance of doubt, the scope of the protection of the following claims extends to any part of a telecommunications apparatus or system or any method performed by such a part, which contributes to the performance of the inventive concept.

## Claims

1. A satellite communications system comprising at least one satellite (4) in orbit about the Earth, and being for receiving a user uplink signal from a user terminal (2) adjacent the Earth, in the presence of co-channel interference from at least one interference source (121) adjacent the Earth, further comprising means for interference mitigation, characterised by said means being arranged to utilise position data related to the spatial separation, relative to the satellite or satellites (4), of the user terminal (2) and the or each said interference source (121) adjacent the Earth, and to spatially filter the content of said user uplink signal in dependence upon said position data to improve the ratio of said signal to said co-channel interference.

2. The system of claim 1, further comprising an Earth station (6), in which said satellite is a repeater and is arranged to transmit the content of said user uplink signal on a feeder downlink signal to said Earth station (6), and in which said interference mitigation means is on Earth and in communication with said Earth station (6).

3. The system of claim 1 or claim 2, in which there are provided at least first and second satellites (4a, 4b) in different positions in orbit relative to the Earth, both arranged to receive respective first and second said user uplink signal from the same user terminal (2), and in which said interference mitigation means is arranged to process the content of both said first and second user uplink signals.

4. The system of any preceding claim, in which said first and second satellites form part of a non-geostationary global coverage constellation.

5. The system of any preceding claim, in which said first and second satellites form part of a cluster of satellites in closely-spaced orbits.

6. The system of any preceding claim, in which said interference mitigation means is arranged to derive said position data.

7. The system of any preceding claim, in which said position data is related to the difference in delay of arrival of a first signal component of the or each said user uplink signal and a second signal component of the or each said user uplink signal, said first signal component being transmitted by said user terminal (2) and said second by said interference source (121).

8. The system of claim 6 when appended to claim 3, wherein said interference mitigation means is arranged to correlate said at least first and second user uplink signals to derive said position data.

9. The system of any preceding claim, in which said interference mitigation means is arranged to compare said separated component signals with at least one predetermined signal, and to label it as corresponding to a user terminal 2 or a particular interference source (121).

10. The system of claim 9, in which said interference mitigation means comprises a store (250) arranged to store predetermined data from a said component signal for use in a subsequent comparison, together with position data representing the position on the Earth from which it originated.

11. The system of any preceding claim, in which interference mitigation means is arranged to derive said position data from the Doppler shift of a said component signal within the or each said user uplink signal.

12. The system of any preceding claim, in which said interference mitigation means is arranged to use said position data and data defining movement of said satellite (4) to compensate for Doppler shift due to the movement of said satellite.

13. The system of claim 10, in which the interference mitigation means is arranged to periodically recalculate co-efficients of a spatial filter (120) utilising said stored position data and data defining the movement of said satellites (4).

14. The system of any preceding claim, in which said interference mitigation means is arranged to execute said spatial filtering taking into account position data of both the user terminal (2) and said at least one interference source (121, 122).

15. The system of any preceding claim, in which said interference mitigation means is arranged to generate spatially separated signal components corresponding to said user terminal (2) and said at least one interference source (121, 122).

16. The system of claim 15, in which said interference mitigation means is arranged to process said separated user terminal component signal in dependence upon said separated interference source signal.

17. The system of claim 16, in which said interference mitigation means is arranged to subtract the or each said interference source component signal from said user terminal component signal.

18. The system of claim 15, in which said interference mitigation means is arranged to filter said user terminal component signal in dependence upon the or each said interference source component signal.

19. Inrterference mitigation means for use in a satellite system according to any preceding claim.

20. A method of reducing the effect of interference from at least one interference source (121, 122) on a signal from a user terminal (2) of a satellite communication system, comprising receiving a signal from first and second satellites (4a, 4b) which includes a user terminal signal component and an interference source signal component; and separating said signal components by spatial filtering utilising data defining the orbits of the satellites and data related to the relative positions of the interference sources (121, 122) and the user terminal (2) on the Earth.

21. Use of change in doppler shift to separate multiple signals.
